(19) **Europäisches Patentamt / European Patent Office / Office européen des brevets**

(11) **EP 1 477 501 B1**

(12) **EUROPEAN PATENT SPECIFICATION**

(45) Date of publication and mention
of the grant of the patent:
**30.05.2007 Bulletin 2007/22**

(21) Application number: **03737500.3**

(22) Date of filing: **06.02.2003**

(51) Int Cl.:
*C08F 279/02* (2006.01)     *C09D 151/06* (2006.01)

(86) International application number:
**PCT/JP2003/001220**

(87) International publication number:
**WO 2003/066694 (14.08.2003 Gazette 2003/33)**

(54) **MODIFIED POLYMER AND COATING MATERIAL**

MODIFIZIERTES POLYMER UND BESCHICHTUNGSMASSE

POLYMERE MODIFIE ET MATERIAU DE REVETEMENT

(84) Designated Contracting States:
**AT BE BG CH CY CZ DE DK EE ES FI FR GB GR HU IE IT LI LU MC NL PT SE SI SK TR**

(30) Priority: **06.02.2002 JP 2002030084**

(43) Date of publication of application:
**17.11.2004 Bulletin 2004/47**

(73) Proprietor: ZEON CORPORATION
**Tokyo 100-0005 (JP)**

(72) Inventors:
• **KITAHARA, Shizuo,**
**c/o ZEON CORPORATION**
**Tokyo 100-0005 (JP)**
• **TANAKA, Yasushi,**
**c/o ZEON CORPORATION**
**Tokyo 100-0005 (JP)**

(74) Representative: **Albrecht, Thomas**
**Kraus & Weisert,**
**Thomas-Wimmer-Ring 15**
**80539 München (DE)**

(56) References cited:
**JP-A- 6 271 806**          **JP-A- 63 023 973**
**US-A- 4 508 877**          **US-A- 5 043 395**

• **DATABASE WPI Derwent Publications Ltd., London, GB; AN 1987-147801 XP002366889 "Wet process developer for xerography" & JP 62 086369 A (TOPPAN PRINTING CO LTD) 20 April 1987 (1987-04-20)**
• **PATENT ABSTRACTS OF JAPAN vol. 006, no. 244 (C-138), 2 December 1982 (1982-12-02) & JP 57 145103 A (KURARAY KK), 8 September 1982 (1982-09-08)**
• **DATABASE WPI Derwent Publications Ltd., London, GB; AN 1988-254548 XP002366890 "negatively chargeable wet developer" & JP 63 186255 A (TOPPAN PRINTING CO LTD) 1 August 1988 (1988-08-01)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Technical Field

This invention relates to a modified polymer which is obtained by modifying a cyclized product of a conjugated diene polymer; and a coating material comprising the modified polymer.

Background Art

It is known that isoprene rubbers such as natural rubber and synthetic isoprene rubber are easily cyclized in the presence of an acid catalyst. Several proposals have been made for applying the thus-cyclized isoprene rubbers as a coating material.

For example, a printing ink or a coating composition for a polyolefin film or polyolefin shaped article has been proposed in Japanese Unexamined Patent Publication No. S51-12827, which ink or composition comprises a vehicle resin and optional ingredients such as a plasticizer and a dispersant, wherein the vehicle resin comprises a cyclized rubber obtained by cyclizing using an acid catalyst a conjugated diene homopolymer or copolymer having a low molecular weight. It is taught in this patent publication that a coating having excellent adhesion and crease-flex resistance can be obtained by using the cyclized rubber as the vehicle.

Another proposal has been made in Japanese Unexamined Patent Publication No. S53-142471, wherein it is taught that a shaped article having a surface exhibiting enhanced adhesion and capable of being easily subjected to fabrication such as coating, printing and adhesion is obtained by modifying a surface of a polyolefin resin shaped article with a surface-treating agent comprising (i) a rubber ingredient selected from halogenated polyolefin, halogenated rubber and cyclized rubber, and (ii) a mixed solvent containing a terpene solvent.

A further proposal has been made in Japanese Unexamined Patent Publication No. S57-145103, which describes a process for producing a cyclized polymer wherein a specific low-molecular-weight diene polymer is cyclized; said low-molecular-weight diene polymer being a modified polymer obtained by addition reaction of a low-molecular-weight isoprene polymer having a molecular weight of 10,000 to 150,000 and containing at least 70% of cis-1,4 bond, wherein 0.3 to 12% by mole, based on the isoprene monomer units in the isoprene polymer, of maleic anhydride or a derivative thereof is added to the low-molecular-weight isoprene. It is taught in this patent publication that the thus-produced cyclized polymer exhibits enhanced adhesion to and compatibility with a polyolefin resin and is suitable for a printing ink and a coating material.

Thus, cyclized products of a conjugated diene polymer, and modified polymers thereof, have heretofore been examined as ingredients for a coating liquid, an ink and an adhesive, which are applied for a polyolefin resin. However, in the case when the hitherto proposed cyclized products and modified polymers are incorporated as a binder or a vehicle in a coating liquid, an ink or an adhesive, a satisfactory improvement in adhesion is difficult or even impossible to achieve. Thus, a further improvement in adhesion is eagerly desired.

Disclosure of the Invention

In view of the foregoing state of prior art, a primary object of the present invention is to provide a modified polymer capable of giving a coating material such as a coating liquid, an ink or a primer using the modified polymer, which exhibits enhanced adhesion to various resins, especially polyolefin resins. Another object of the present invention is to provide a coating material exhibiting enhanced adhesion to various resins and resin shaped articles.

The present inventors conducted extensive researches into a method of modifying a cyclized product of a conjugated diene polymer, and the amount of a modifying group to be included in the cyclized product, and have found that the above-mentioned objects can be achieved by a modified polymer having a specific hydroxyl value, obtained by addition reaction of a compound having one or more hydroxyl groups and a polymerizable unsaturated bond, to a cyclized product of a conjugated diene polymer.

Thus, in one aspect of the present invention, there is provided a modified polymer having a hydroxyl value in the range of 1 to 100 mgKOH/g, which is obtained by addition reaction of a compound (b) having one or more hydroxyl groups and a polymerizable unsaturated bond to a cyclized product (a) of a conjugated diene polymer having a cyclization degree in the range of 30 to 95%.

In another aspect of the present invention, there is provided a coating material comprising the above-mentioned modified polymer.

This coating material is suitable for producing a coated shaped article by coating various shaped articles such as resin shaped articles, especially a polyolefin resin shaped article, with the coating material as, for example, a primer, a coating liquid or an ink.

Best Mode for Carrying Out the Invention

The modified polymer and coating material of the present invention will be described in detail.

Modified Polymer

The modified polymer of the present invention is obtained by addition reaction of a compound (b) having one or more hydroxyl groups and a polymerizable unsaturated bond to a cyclized product (a) of a conjugated diene polymer having a cyclization degree in the range of 30 to 95%. The modified polymer must have a hydroxyl value in the range of 1 to 100 mgKOH/g.

The cyclization degree of the cyclized product (a) of a conjugated diene polymer is determined as follows. Peak area of proton attributed to double bonds is measured before and after the cyclization reaction of the conjugated diene polymer by proton NMR, whereby the percentage of unreacted double bonds remaining in the cyclized product, based on the double bonds in the conjugated diene polymer as measured before cyclization, is determined. The cyclization degree (%) is calculated by the following formula:

$$\text{Cyclization degree (\%)} = [100 - (\% \text{ of unreacted double bonds remaining in the cyclized product})]$$

The conjugated diene polymer used for the production of the cyclized product (a) includes those which are prepared by polymerization of a conjugated diene monomer by a conventional procedure, and natural rubber. As specific examples of the conjugated diene monomer, there can be mentioned 1,3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene, 3-butyl-1,3-octadiene and chloroprene. Of these, 1,3-butadiene and isoprene are preferable. These conjugated diene monomers may be used either alone or as a combination of at least two thereof.

The conjugated diene polymer giving the cyclized product may be a copolymer of the conjugated diene monomer with other copolymerizable monomer. As specific examples of the monomer copolymerizable with the conjugated diene monomer, there can be mentioned aromatic vinyl compounds such as styrene, α-methylstyrene, p-methylstyrene, p-phenylstyrene, p-methoxystyrene, chloromethylstyrene, m-fluorostyrene and vinylnaphthalene; and olefinic compounds such as propylene, isobutylene, vinyl chloride and vinylidene chloride. Of these, aromatic vinyl compounds are preferable. Styrene and α-methylstyrene are especially preferable.

The amount of the monomer copolymerizable with a conjugated dine monomer is not particularly limited provided that the effect of the present invention can be obtained, but, is not more than 60% by weight, preferably not more than 45% by weight, based on the total amount of the conjugated diene monomers.

The weight average molecular weight of the conjugated diene polymer is not particularly limited, but is preferably in the range of 30,000 to 500,000, more preferably 50,000 to 300,000, as measured by GPC (gel permeation chromatography) and expressed in terms of that of standard polystyrene. When the weight average molecular weight is too small, the resulting modified polymer tends to have a poor adhesion to a polyolefin resin. In contrast, when the weight average molecular weight is too large, a solution of the modified polymer is liable to have a high viscosity and is often difficult to form a uniform coating therefrom.

The cyclized product (a) of a conjugated diene polymer used for the production of the modified polymer of the present invention is produced by cyclizing the above-mentioned conjugated diene polymer using an acid catalyst as cyclization catalyst. More specifically the previously prepared conjugated diene polymer is brought into contact with an acid catalyst in an inert solvent.

As specific examples of the acid catalyst, there can be mentioned sulfuric acid; sulfonic acids such as monofluoromethanesulfonic acid, difluoromethanesulfonic acid and p-toluenesulfonic acid, and anhydrides of these sulfonic acids, and organic sulfonic acid compounds such as alkylesters of these sulfonic acids; and metal halides such as boron trifluoride, boron trichloride, tin tetrachloride, titanium tetrachloride, aluminum chloride, diethylaluminum monochloride, aluminum bromide, amtimony pentachloride, tungsten hexachloride and iron chloride.

The inert solvent used as a reaction medium for cyclization reaction is not particularly limited, and, as specific examples thereof, there can be mentioned aromatic hydrocarbons such as benzene, toluene, xylene and ethylbenzene; chain-like aliphatic hydrocarbons such as n-pentane, n-hexane, n-heptane and n-octane; and alicyclic hydrocarbons such as cyclopentane and cyclohexane. Of these, hydrocarbons having a boiling point of at least 70°C are preferable. The solvent used as polymerization medium in the above-mentioned polymerization for the production of a conjugated diene polymer can be used as it is as the reaction medium for cyclization reaction. In this case, an acid catalyst is added to the as-produced polymerization liquid to effect cyclization of the conjugated diene polymer in the polymerization liquid.

The reaction temperature, the reaction time, the amount of acid catalyst, and other reaction conditions can appropriately be determined depending upon the intended degree of cyclization. The reaction temperature is preferably in the range of 20 to 200°C, more preferably 50 to 150°C and especially preferably 80 to 100°C. The reaction time is preferably in the range of 1 to 20 hours, more preferably 2 to 15 hours and especially preferably 3 to 10 hours.

The cyclized product (a) of a conjugated diene polymer must have a cyclization degree in the range of 30 to 95%. The cyclization degree is preferably 50 to 90% and more preferably 55 to 85%. When the cyclization degree is too small or too large, the object of the present invention is difficult to achieve. The magnitude (n) of sequence of rings in the cyclized product (a) is not particularly limited and n is usually in the range of 1 to 3.

The cyclized product (a) can be hydrogenated, if desired. The manner for hydrogenation is not particularly limited. The hydrogenation can be carried out in the conventional manner using a conventional hydrogenation catalyst and hydrogen.

The modified polymer of the present invention is produced by an additional reaction of a compound (b) having one or more hydroxyl groups and a polymerizable unsaturated bond. The compound (b) is not particularly limited provided that it has one or more hydroxyl groups and a polymerizable unsaturated bond and is capable of being added to the cyclized product (a) by heat or a radical generator.

As specific examples of the compound (b), there can be mentioned hydroxyalkyl esters of unsaturated acids such as 2-hydroxyethyl acrylate, 2-hydroxypropyl acrylate, 3-hydroxypropyl acrylate, 2,3-dihydroxypropyl acrylate, 2-hydroxyethyl methacrylate, 2-hydroxypropyl methacrylate, 3-hydroxypropyl methacrylate and 2,3-dihydroxypropyl methacrylate; unsaturated acid amides having a hydroxyl group such as N-methylolacrylamide, N-(2-hydroxyethyl)acrylamide, N-methylolmethacrylamide and N-(2-hydroxyethyl)-methacrylamide; polyalkylene glycol monoesters such as unsaturated acids such as polyethylene glycol monoacrylate, polypropylene glycol monoacrylate, polytetramethylene glycol monoacrylate, poly(ethylene glycol-propylene glycol) monoacrylate, poly(ethylene glycol-tetramethylene glycol) monoacrylate, poly(propylene glycol-tetramethylene glycol) monoacrylate, polyethylene glycol monomethacrylate, polypropylene glycol monomethacrylate, polytetramethylene glycol monomethacrylate, poly(ethylene glycol-propylene glycol) monomethacrylate, poly(ethylene glycol-tetramethylene glycol) monomethacrylate and poly(propylene glycol-tetramethylene glycol) monomethacrylate; and polyhydric alcohol monoesters of unsaturated acids such as glycerol monoacrylate and glycerol monomethacrylate. Of these, hydroxyalkyl esters of unsaturated acids are preferable. 2-Hydroxyethyl acrylate and 2-hydroxymethyl methacrylate are especially preferable.

The compounds (b) may be used either alone or as a combination of at least two thereof.

The procedure of addition reaction by which the compound (b) is added to the cyclized product (a) is not particularly limited. Reaction conditions which are conventionally adopted in ene-addition reactions or graft polymerization reactions can be adopted. Usually the cyclized product (a) and the compound (b) are heated in the presence or absence (solid phase reaction) of a solvent and in the presence or absence of a radical generator whereby the addition reaction can easily be effected.

The solvent used for the addition reaction includes, for example, those which are used for the above-mentioned cyclization reaction. The radical generator used for the addition reaction includes, for example, peroxides such as di-tert-butyl peroxide, tert-butyl hydroperoxide, dicumyl peroxide, benzoyl peroxide, tert-butyl peroxybenzoate, methyl ethyl ketone peroxide and di-tert-butyl diperphthalate; and azonitriles such as azobisisobutyronitrile.

The thus-prepared modified polymer of the present invention is comprised of a portion derived from the cyclized product (a) and a portion derived from the compound (b). The amount of hydroxyl group having been introduced into the cyclized product (a) by the addition reaction is expressed in terms of a hydroxyl value, i.e., amount (mg) of potassium hydroxide, as determined by a method wherein 1 g of a modified polymer sample is acetylized with an acetylating reagent, and the amount (mg) of potassium hydroxide required for neutralizing the acetic acid bound to the hydroxyl group is measured.

The modified polymer of the present invention must have a hydroxyl value in the range of 1 to 100 mgKOH/g, preferably 5 to 50 mgKOH/g and more preferably 8 to 30 mgKOH/g. When the hydroxyl value of modified polymer exceeds 100 mgKOH/g, a coating material (e.g., a coating liquid) containing the modified polymer tends to give a coating having a poor wet adhesion resistance. In contrast, when the hydroxyl value is smaller than 1 mgKOH/g, the coating material gives a coating having a poor adhesion.

The modified polymer usually has a weight average molecular weight in the range of 5,000 to 600,000, preferably 20,000 to 400,000 and more preferably 35,000 to 300,000, as measured by gel permeation chromatography (GPC) and expressed in terms of that of polystyrene.

The manner of using the modified polymer of the present invention, and the use thereof, are not particularly limited, but the modified polymer is suitable for use in coating materials, more specifically it is used as a binder resin or a vehicle resin to be incorporated in various coating materials.

Coating Material

The coating material of the present invention comprises the above-mentioned modified polymer, and is used for coating at least part of the surface of a shaped article to make a coated shaped article. The mode for use of the coating material is not particularly limited, and, as preferable examples of the mode for use, there can be mentioned a primer, a coating liquid and an ink. These materials will be specifically described in the following.

A primer is used as an undercoating material applied to a surface to be coated prior to the application of other coating materials such as a coating liquid or an adhesive. A primer is a composition comprising a binder resin and optional ingredients, which are uniformly dissolved or dispersed in a solvent. By using the modified polymer of the present invention as a binder resin, an adhesion between a surface of a shaped article and other coating material can be enhanced.

The content of the modified polymer of the present invention in a primer composition is not particularly limited, but is usually in the range of 5 to 95% by weight, preferably 10 to 90% by weight and more preferably 15 to 80% by weight, based on the weight of the primer composition. Other binder resins may be incorporated in combination with the modified polymer of the present invention in the primer composition. As specific examples of the binder resins to be used in combination, there can be mentioned an olefin resin, an acrylic resin, an urethane resin, an epoxy resin, a melamine resin, an alkyd resin, a chlorinated olefin rein, a silicone rubber and an acrylic rubber.

The ingredients optionally added in the primer composition includes, for example, an antioxidant, an ultraviolet absorber, a defoaming agent, a thickening agent, a dispersing agent and a surface active agent.

The solvent used for the primer composition is not particularly limited provided that a binder resin comprising the modified polymer of the present invention can be dissolved or dispersed therein. Ordinarily used solvents include an aliphatic hydrocarbon solvent, an aromatic hydrocarbon solvent, a ketone solvent, an alcohol solvent, an ether solvent, a halogen-containing solvent and an aqueous solvent. Of these, an aliphatic hydrocarbon solvent, an aromatic hydrocarbon solvent, a ketone solvent and an aqueous solvent are preferable in view of solubility of the binder resin and volatility of solvent.

No limitation is imposed to a coating liquid, an adhesive or other coating materials to be coated on the primer-treated surface of a shaped article. As preferable examples of the coating liquid, there can be mentioned an acrylic coating liquid, a polyester coating liquid, an alkyd-melamine coating liquid, a polyurethane coating liquid and a polyester-melamine coating liquid. As preferable examples of the adhesive, there can be mentioned an epoxy adhesive, an urethane adhesive, an acrylic adhesive an a cyanoacrylate rapidly curing adhesive.

A coating liquid usually comprises a pigment, a binder resin, a solvent and optional ingredients. The binder resin has a function of binding a pigment onto a surface of a shaped article. When the modified polymer of the present invention is incorporated as a binder resin in a coating liquid, a pigment can be firmly adhered onto the shaped article surface. The amount of the modified polymer of the present invention in the coating liquid is not particularly limited, but is usually in the range of 5 to 95% by weight, preferably 10 to 90% by weight and more preferably 15 to 80% by weight, based on the weight of the coating liquid.

Other binder resins may be incorporated in the coating liquid in combination with the modified polymer of the present invention, if desired. As specific examples of such binder resins, there can be mentioned an acrylic resin, an urethane resin, an epoxy resin, a melamine resin and an alkyd resin.

The pigment used for the coating liquid include, for example, coloring pigments including organic pigments and inorganic pigments, and rust-preventing pigments. The content of pigment in the coating liquid may be appropriately determined depending upon the particular kind of pigment, the intensity of color, and other factors.

The solvent used for the coating liquid is not particularly limited provided that a binder, a pigment and other ingredients can be uniformly dissolved or dispersed therein. The solvent used for the coating liquid include those which are used for the above-mentioned primer composition. The ingredients optionally added in the coating liquid includes, for example, an antioxidant, an ultraviolet absorber, a defoaming agent, a thickening agent, a dispersing agent and a surface active agent.

An ink usually comprises a coloring material, a vehicle and optional ingredients. The modified polymer of the present invention is especially useful as a vehicle for an ink, especially gravure ink.

A vehicle has a function of bonding a coloring material onto a surface of a shaped article, and usually comprises a polymer ingredient and a solvent. The modified polymer of the present invention is contained in the polymer ingredient in an amount of 5 to 100% by weight, preferably 10 to 90% by weight and more preferably 20 to 80% by weight, based on the weight of the polymer ingredient. The polymer ingredient in the vehicle may comprise other polymers in combination with the modified polymer of the present invention, and, as examples of such polymers, there can be mentioned those which are mentioned above as binder resins to be optionally incorporated in the primer composition.

A coloring material used for an ink includes, for example, pigments including organic pigments and inorganic pigments, and carbon black and dyes. Of these, pigments are preferable in view of the light resistance and chemical resistance.

The solvent used for the ink is not particularly limited provided that the polymer ingredient, a coloring material and other optional ingredients can be uniformly dissolved or dispersed therein. The solvent used for the ink includes organic solvents and aqueous solvents, and, as specific examples thereof, there can be mentioned those which are used for the above-mentioned primer composition.

The ingredients optionally added in the ink includes, for example, a plasticizer, a dispersing agent, a defoaming agent, a leveling agent, a viscosity-modifier, an adhesion-imparting agent, an antistatic agent and a filler. A polymerizable monomer, a curing agent, a defoaming agent or a reaction initiator may be incorporated in the ink to give an ink curable with ultraviolet rays or by heat, and having a more enhanced adhesion.

Shaped articles to be coated with the above-mentioned coating material are not particularly limited, but are preferably various resin shaped articles, and especially preferably polyolefin resin shaped articles. As specific examples of the polyolefin resin, there can be mentioned propylene resins such as a propylene homopolymer, a propylene-ethylene copolymer, a propylene-butene copolymer and a propylene-octene copolymer; an ethylene homopolymer; norbornene polymers and hydrogenation products thereof; and cyclic conjugated diene polymers and hydrogenation products thereof.

The procedure for coating shaped articles with the above-mentioned coating material to give a coated shaped article is not particularly limited. The amount of coating material to be applied onto the shaped article is also not particularly limited, but is usually chosen in the range of 1 to 100 μm as expressed in terms of thickness of dry coating. The coating can be carried out by the conventional procedure including, for example, spray coating, brush coating, trowel coating, roll coating, flow-coating and dip coating. The liquid coating material applied can be dried at room temperature or under heated conditions.

Examples

The invention will now be specifically described by the following examples that by no means limit the scope of the invention.

Parts and % in the following examples are by weight unless otherwise specified.

(1) Weight Average Molecular Weight of Polymer

The weight average molecular weight of polymers was measured by gel permeation chromatography (GPC) and expressed in terms of that of standard polystyrene.

(2) Cyclization Degree of Cyclized Product of Conjugated Diene Polymer

Cyclization degree of a cyclized product of a conjugated diene polymer was determined as follows. Peak area of proton attributed to double bonds is measured before and after the cyclization reaction of the conjugated diene polymer by proton NMR, whereby the percentage of unreacted double bonds remaining in the cyclized product, based on the double bonds in the conjugated diene polymer as measured before cyclization, is determined. The cyclization degree (%) is calculated by the following formula:

```
Cyclization degree (%) = [100 - (% of unreacted double bonds
remaining in the cyclized product)]
```

(3) Hydroxyl value

Hydroxyl value (mgKOH/g) of a modified polymer was determined according to the method described in "Standard Methods for the Analysis of Oils and Fats and Derivatives" 2.4.9.2-83, published by Japan Oil Chemists' Society.

(4) Initial Adhesion (Lattice Pattern Cutting Test)

A coated surface of a resin shaped article was scored by drawing eleven scored lines with 2 mm intervals in each of the two directions perpendicular to each other by a cutter to form a lattice pattern having 100 squares. A self-adhesive cellophane tape was adhered on the lattice pattern, and a peeling test was conducted by pulling the adhered tape rapidly at a peeling angle of 45°. The initial adhesion was evaluated by the ratio in % of the number of squares remaining without separation per 100 squares.

(5) Wet Adhesion

A coated resin plate was dipped in warm water maintained at 40°C for 240 hours. Thereafter, a lattice pattern cutting test was conducted in the same manner as mentioned above for the determination of the initial adhesion. The wet adhesion was evaluated by the ratio in % of the number of squares remaining without separation per 100 squares.

(6) Accelerated Weathering Test

An accelerated weathering test was carried out by exposing a coated shaped article to accelerated weathering for a predetermined time using a carbon-arc type sunshine weatherometer. Thereafter, specular reflection percentage was measured according to JIS K5400-7.6 at an incident angle of 60° from the light source.

(7) Flowability of Primer and Coating Liquid

Flowability was determined by measuring flow-down time (in seconds) at 20°C by the Ford cup No.4 method according to JIS K 5400.

(8) Heat-Sealing Strength

Ink-coated surface of a shaped article was superposed upon another ink-coated surface of a shaped article so that the ink-coated surfaces are contacted with each other. The superposed ink-coated surfaces are pressed at a temperature of 110°C under a pressure of $9.8 \times 10^{-2}$ MPa for 2 seconds to be thereby heat-sealed, and then the heat-sealed articles were allowed to stand at a temperature of 23°C for 24 hours in a thermostatic chamber. Then a peeling test was carried out at a pulling rate of 50 mm/min and a peeling angle of 180° to measure heat-sealing strength (g/cm).

Example 1 (Production of Modified Polymer A)

A four-necked flask equipped with a stirrer, a thermometer, a reflux condenser and a nitrogen gas-introducing tube was charged with 100 parts of polyisoprene (cis-1,4-structure isoprene content: 86%, trans-1,4-structure isoprene content: 12%, 3,4-structure isoprene content: 2%; weight average molecular weight: 136,000), and 1,570 parts of toluene. The polyisoprene was cut into squares having a size of 10 mm x 10 mm prior to the introduction into the flask. The inner atmosphere of the flask was substituted by nitrogen gas, and then the flask was placed in an oil bath maintained at 85°C while the content was stirred, whereby polyisoprene was dissolved in toluene. After completion of dissolution, 3.9 parts of p-toluenesulfonic acid were added, and the mixed solution was stirred while being maintained at 85°C, to conduct a cyclization reaction. When 5 hours elapsed, 400 parts of ion-exchanged water were added to the reaction liquid to stop the cyclization reaction. The reaction liquid was allowed to stand for 30 minutes to separate an oil layer. The separated oil layer was washed three times with 400 parts of ion-exchanged water, and thereafter was subjected to centrifugal separation at a revolution number of 300 rpm to remove water. Then the oil layer was heated at 130°C to completely remove water.

To the solution in toluene of the thus-obtained cyclized product, 10.0 parts of 2-hydroxyethyl methacrylate was added at a constant rate over a period of 5 minutes while the toluene solution was stirred. After an addition reaction was conducted at 160°C for 4 hours, the reaction liquid was poured into a 3,000 parts of a methanol solution containing 1% of 2,6-di-tert-butylphenol to recover a precipitate. The recovered precipitate was dried under a reduced pressure to obtain modified polymer A. The cyclization degree of cyclized product, and the weight average molecular weight and hydroxyl value of modified polymer A are shown in Table 1.

Example 2 (Production of Modified Polymer B)

Cyclization reaction was carried out by the same procedures as described in Example 1 wherein polyisoprene having a cis-1,4-structure isoprene content of 73%, a trans-1,4-structure isoprene content of 22% and a 3,4-structure isoprene content of 5%, and a weight average molecular weight of 107,000 was used, and the amount of p-toluenesulfonic acid was changed to 3.6 parts with all other conditions remaining the same.

Modified polymer B was produced from the thus-obtained cyclized product solution, by the same procedures as described in Example 1 wherein the amount of 2-hydroxyethyl acrylate was changed to 4.0 parts with all other conditions remaining the same. The cyclization degree of cyclized product, and the weight average molecular weight and hydroxyl value of modified polymer B are shown in Table 1.

Example 3 (Production of Modified Polymer C)

Cyclization reaction was carried out by the same procedures as described in Example 1 wherein polyisoprene having a cis-1,4-structure isoprene content of 28%, a trans-1, 4-structure isoprene content of 14% and a 3,4-structure isoprene content of 56%, and a weight average molecular weight of 252,000 was used, and the amount of p-toluenesulfonic acid was changed to 3 parts with all other conditions remaining the same.

Modified polymer C was produced from the thus-obtained cyclized product solution, by the same procedures as described in Example 1 wherein the amount of 2-hydroxyethyl acrylate was changed to 5.6 parts with all other conditions remaining the same. The cyclization degree of cyclized product, and the weight average molecular weight and hydroxyl value of modified polymer C are shown in Table 1.

Example 4 (Production of Modified Polymer D)

Cyclization reaction was carried out by the same procedures as described in Example 1 wherein polybutadiene having a cis-1,4-structure butadiene content of 26%, a trans-1,4-structure butadiene content of 18% and a 1,2-structure butadiene content of 56%, and a weight average molecular weight of 210,000 was used instead of polyisoprene, and the amount of toluene was changed to 1,620 parts. Further, after the polybutadiene was completely dissolved in toluene, the solution was maintained at 23°C, 2.78 parts of benzyl chloride and 1.98 parts of ethylaluminum chloride were added instead of p-toluenesulfonic acid. When 12 minutes elapsed from the dissolution, 20 parts of methanol were added to the reaction liquid to stop the cyclization reaction. All other conditions remained the same.

Modified polymer D was produced from the thus-obtained cyclized product solution, by the same procedures as described in Example 1 wherein 3.0 parts of 2-hydroxyethyl methacrylate were added to conduct an addition reaction with all other conditions remaining the same. The cyclization degree of cyclized product, and the weight average molecular weight and hydroxyl value of modified polymer D are shown in Table 1.

Comparative Example 1 (Production of Maleic Acid-Modified Polymer E)

In this comparative example, a maleic acid-modified polymer was produced by reference to the procedures as described in Japanese Unexamined Patent Publication No. 57-145,103.

A four-necked flask equipped with a stirrer, a thermometer, a reflux condenser and a nitrogen gas-introducing tube was charged with 100 parts of polyisoprene (cis-1,4-structure isoprene content: 73%, trans-1,4-structure isoprene content: 22%, 3,4-structure isoprene content: 5%; weight average molecular weight: 107,000), and 1,570 parts of toluene. The polyisoprene was cut into squares having a size of 10 mm $\times$ 10 mm prior to the introduction into the flask. The inner atmosphere of the flask was substituted by nitrogen gas, and then the flask was placed in an oil bath maintained at 80°C while the content was stirred, whereby polyisoprene was dissolved in toluene. After completion of dissolution, 7.2 parts of maleic anhydride were added, and the mixed solution was stirred while being maintained at 80°C, to conduct a cyclization reaction. After an addition reaction was conducted for 1 hour, the reaction liquid was poured into a 3,000 parts of a acetone solution containing 1% of 2,6-di-tert-butylphenol to recover a precipitate. The recovered precipitate was dried under a reduced pressure to obtain a maleic acid-modified isoprene polymer.

100 parts of the maleic acid-modified isoprene polymer was dissolved in 300 parts of toluene. To the obtained solution, 3.6 parts of p-toluenesulfonic acid were added and the solution was maintained at 85°C to conduct a cyclization reaction with stirring. When about 5 hours elapsed, 400 parts of ion-exchanged water were added to the reaction liquid to stop the cyclization reaction. The reaction liquid was allowed to stand for 30 minutes to separate an oil layer. The separated oil layer was washed three times with 400 parts of ion-exchanged water, and thereafter, the oil layer was poured into a 1, 000 parts of a methanol solution containing 1% of 2,6-di-tert-butylphenol to recover a precipitate. The recovered precipitate was dried under a reduced pressure to obtain a cyclized product of the maleic acid-modified isoprene polymer (modified polymer E). The cyclization degree and weight average molecular weight of modified polymer E, and the amount of maleic anhydride added in modified polymer E are shown in Table 1.

Comparative Example 2 (Production of Cyclized Polymer F)

Cyclization reaction of polyisoprene was carried out by the same procedures as described in Example 1 wherein the toluene solution containing the thus-obtained cyclized product was poured into 3,000 parts of a methanol solution containing 1% of 2,6-di-tert-butylphenol to recover a precipitate. The recovered precipitate was dried under a reduced pressure to obtain cyclized polymer F. The cyclization degree and weight average molecular weight of cyclized polymer F are shown in Table 1.

Comparative Example 3 (Production of Modified Polymer G)

Cyclization reaction of polyisoprene was carried out by the same procedures as described in Example 1, and then, modified polymer G was produced from the thus-obtained cyclized product solution, by the same procedures as described in Example 1 wherein the amount of 2-hydroxyethyl acrylate was changed to 36.3 parts with all other conditions remaining the same. The cyclization degree of cyclized product, and the weight average molecular weight and hydroxyl value of modified polymer G are shown in Table 1.

Table 1

|  | Examples | | | | Comparative Examples | | |
|---|---|---|---|---|---|---|---|
|  | 1 | 2 | 3 | 4 | 1 | 2 | 3 |
| Modified polymer | A B C | | | D | E | F | G |
| CD (%) of cyclized product *1 | 83 | 78 | 71 | 58 | 82 | 83 | 83 |
| Mw of cyclized product *2 | 95,200 | 73,000 | 252,000 | 179,000 | 75,000 | 95,400 | 95,400 |
| OH value (mgKOH/g) | 28.5 | 16.9 | 11.2 | 8.1 | - | - | 140 |
| Amount of maleic anhydride added (wt. %) | - | - | - | - | 3.1 | - | - |

Note, *1 Cyclization degree of cyclized product of modified polymer
*2 Weight average molecular weight of cyclized product of modified polymer

Examples 5-8 and Comparative Examples 4-6 (Preparation of Primer and Evaluation)

Seven kinds of primers were prepared by using modified polymers A through G as binder resins, produced in Examples 1-4 and Comparative Examples 1-3, according to the formulations (parts by weight) shown in Table 2. The ingredients shown in Table 2 were mixed together by a high-speed stirrer (Disper) for 10 minutes, and each mixture was diluted with toluene to give a primer having a flowability of 13 to 14 seconds as flowing down time.

Table 2

|  | Examples | | | | Comparative Examples | | |
|---|---|---|---|---|---|---|---|
|  | 5 | 6 | 7 | 8 | 4 | 5 | 6 |
| Modified polymer A | 10 | - | - | - | - | - | - |
| Modified polymer B | - | 10 | - | - | - | - | - |
| Modified polymer C | - | - | 10 | - | - | - | - |
| Modified polymer D | - | - | - | 10 | - | - | - |
| Modified polymer E *1 | - | - | - | - | 10 | - | - |
| Modified polymer F | - | - | - | - | - | 10 | - |
| Modified polymer G | - | - | - | - | - | - | 10 |
| Titanium oxide | 15 | 15 | 15 | 15 | 15 | 15 | 15 |
| Carbon black | 0.1 | 0.1 | 0.1 | 0.1 | 0.1 | 0.1 | 0.1 |
| Toluene | 85 | 85 | 85 | 85 | 85 | 85 | 85 |

Note. *1 Maleic acid-modified

Resin materials shown in Table 3 were mixed together by Henschel mixer and melt-kneaded by a twin-screw extruder to produce pellets. The pellets were injection-molded to give three kinds of plates X, Y and Z each having a size of 50 mm × 80 mm × 3 mm.

Table 3

| Plate molding | Resin material and ingredients for plate molding |
|---|---|
| X | Polypropylene resin, J-3054HP available from Idemitsu Petro. Chem. Co. |
| Y | Hydrogenated product of ring-opened polymer comprising 15 wt.% of ethyltetracyclododecene units and 85 wt.% of dicyclopentadiene units. Tg: 103°C, degree of hydrogenation: more than 99%. |

(continued)

| Plate molding | Resin material and ingredients for plate molding |
|---|---|
| Z | (1) Polypropylene resin, J-3054HP available from Idemitsu Petro. Chem. Co. (2) Ethylene/butane-1 copolymer, EBM 3021 available from JSR Corporation (3) Talc JM-209, available from Asada Seifun K.K. Ratio (1)/(2)/(3) = 70/23/7 (parts by weight) |

Plates X, Y and Z were washed thoroughly with water, and then dried. A primer having the formulation shown in Table 2 was applied onto each plate by a spray coating method at a spraying pressure of 3.5 to 5.0 MPa using a spray gun with an orifice of 1.0 mm diameter to form a coating having a thickness of 10 $\mu$ m. When 5 minutes elapsed, a two-part curable urethane metallic coating liquid (tradename "RB-212" base coating liquid and tradename "RB-288" clear coating liquid, available from Nippon Bee Chemical Co., Ltd.) was applied by a two-coat method using the same spray gun as mentioned above to form a coating having a thickness of 40 $\mu$m. Then drying was carried out at 23°C for 15 minutes and further at 80°C for 30 minutes in a non-circular drier. The dried coated plate was allowed to stand for 3 days at room temperature, and then, was tested for its initial adhesion (lattice pattern cutting test) and wet adhesion. The results of initial adhesion test and wet adhesion test are shown in Tables 4 and 5, respectively.

Table 4

|  | Plate X | Plate Y | Plate Z |
|---|---|---|---|
| Example 5 | 100/100 | 100/100 | 100/100 |
| Example 6 | 100/100 | 100/100 | 100/100 |
| Example 7 | 100/100 | 100/100 | 100/100 |
| Example 8 | 100/100 | 100/100 | 100/100 |
|  |  |  |  |
| Comp. Ex. 4 | 50/100 | 60/100 | 50/100 |
| Comp. Ex. 5 | 0/100 | 0/100 | 20/100 |
| Comp. Ex. 6 | 40/100 | 50/100 | 70/100 |

Table 5

|  | Plate X | Plate Y | Plate Z |
|---|---|---|---|
| Example 5 | 100/100 | 100/100 | 100/100 |
| Example 6 | 100/100 | 100/100 | 100/100 |
| Example 7 | 100/100 | 100/100 | 100/100 |
| Example 8 | 100/100 | 100/100 | 100/100 |
| Comp. Ex. 4 | 40/100 | 30/100 | 60/100 |
| Comp. Ex. 5 | 0/100 | 0/100 | 0/100 |
| Comp. Ex. 6 | 0/100 | 0/100 | 0/100 |

As seen from the evaluation results shown in Tables 4 and 5, in the case when a resin shaped article is pre-coated with a primer having incorporated therein each of modified polymers A through D of the present invention, a coating formed on the primer undercoating layer exhibits greatly improved adhesion. In contrast, in the case when a resin shaped article is pre-coated with a primer having incorporated therein a maleic anhydride-modified polymer E, an unmodified cyclized polymer F or a modified polymer G having a too large hydroxyl value, a coating formed on the primer undercoating layer exhibits poor adhesion.

Reference Example 1 (Preparation of Polyester Used for Coating Material)

A four-necked flask equipped with a stirrer, a thermometer, a reflux condenser and a nitrogen gas-introducing tube was charged with 800 parts of terephthalic acid, 770 parts of 2-butyl-2-ethyl-1,3-propanediol, 72.7 parts of pentaerythritol and 0.80 part of monobutyltin oxide. The content was stirred while nitrogen gas was introduced. The temperature of the content was elevated from 200°C to 240°C over a period of 6 hours while water produced and part of the unreacted monomers were removed, to carry out a reaction. Further, the reaction was continued at 240°C for 3 hours while dehydration was carried out under a reduced pressure of 50 mmHg. The thus-obtained polyester had a weight average molecular weight of 43,000, an acid value of 0.35 mgKOH/g and a hydroxyl value of 46 mgKOH/g.

Examples 9-10 and Comparative Examples 7-8 (Preparation of Coating Liquid and Evaluation)

Four kinds of white coating liquids were prepared by using modified polymers A and B, produced in Examples 1 and 2, and modified polymers E and G, produced in Comparative Examples 1 and 3, and polyester produced in Reference Example 1, according to the formulations (parts by weight) shown in Table 6. The ingredients shown in Table 6 were kneaded together by a sand grinder mill for 1 hour, and each mixture was diluted with xylene to give a coating liquid having a flowability of 13 to 14 seconds as flowing down time.

Table 6

|  | Examples | | Comp. Examples | |
|---|---|---|---|---|
|  | 9 | 10 | 7 | 8 |
| Modified polymer A | 25 | - | - | - |
| Modified polymer B | - | 25 | - | - |
| Modified polymer E *1 | - | - | 25 | - |
| Modified polymer G | - | - | - | 25 |
| Polyester | 20 | 20 | 20 | 20 |
| Titanium oxide | 30 | 30 | 30 | 30 |
| Xylene | 125 | 125 | 125 | 125 |
| Note, *1 Maleic acid-modified | | | | |

The above-mentioned plate X was washed with water, and then dried. Each white coating liquid shown in Table 6 was applied onto plate X by a spray coating method using the same spray gun as mentioned to form a coating having a thickness of 40 $\mu$m. The coating was dried at 23°C for 15 minutes and further at 80°C for 30 minutes in a non-circular drier. The dried coated plate was allowed to stand for 7 days at room temperature, and then, was tested for its initial adhesion (lattice pattern cutting test), wet adhesion and accelerated weather resistance. The results are shown in Table 7.

Table 7

|  |  | Examples | | Comp. Examples | |
|---|---|---|---|---|---|
|  |  | 9 | 10 | 7 | 8 |
| Initial adhesion | | 100/100 | 100/100 | 90/100 | 90/100 |
| Wet adhesion | | 100/100 | 100/100 | 60/100 | 50/100 |
| Accelerated weathering resistance (%) *1 | | | | | |
| Exp. time | 0 hr | 100 | 100 | 100 | 100 |
|  | 100 hr | 98 | 98 | 95 | 94 |
|  | 250 hr | 98 | 98 | 92 | 90 |
|  | 480 hr | 95 | 96 | 88 | 87 |
| *1 Mirror reflection % v. exposure time (hour) in accelerated weathering test | | | | | |

As seen the results of evaluation of coating liquids shown in Table 7, the coating liquid comprising modified polymer A or B of the present invention exhibits improved adhesion to an olefin resin shaped article. In contrast, the coating liquid comprising modified polymer G having a hydroxyl value of 140 mgKOH/g has a poor wet adhesion.

Examples 11-12 and Comparative Examples 9-10

Sampling was carried out according to the ink formulation shown in Table 8. The prepared composition was kneaded by using a twin-roll mill for 30 minutes, and was diluted with toluene to an extent such that the flowing down time was 25 to 30 seconds as measured at 20°C by a No. 3 Zahn-type flow cup, to prepare a blue ink. As a pigment, copper phthalocyanine cyan pigment Heriogen Blue S7084 (available from BASF AG) was used. The blue ink was coated on a polypropylene film by a coating rod No. 14 (available from Tokyo Photoeletric Co.), and the coating layer was dried at 23°C for 24 hours. The initial adhesion was evaluated by the lattice pattern cutting test. The results are shown in Table 8.

Table 8

|  | Examples | | Comp. Examples | |
|---|---|---|---|---|
|  | 11 | 12 | 9 | 10 |
| Modified polymer A | 30 | - | - | - |
| Modified polymer C | - | 30 | - | - |
| Modified polymer E *1 | - | - | 30 | - |
| Modified polymer G | - | - | - | 30 |
| Polyester | 15 | 15 | 15 | 15 |
| Toluene | 120 | 120 | 120 | 120 |
| Cyan pigment *2 | 5 | 5 | 5 | 5 |
| Initial adhesion *3 | 100/100 | 100/100 | 30/100 | 90/100 |
| Heat seal strength (g/cm) | 270 | 250 | 80 | 150 |

Note, *1 Maleic acid-modified
*2 Heriogen Blue S7084
*3 Lattice pattern cutting test

As seen from the results for evaluation of inks shown in Table 8, the ink comprising modified polymer A or C of the present invention exhibits improved adhesion to an olefin resin shaped article. In contrast, the ink comprising modified polymer G having a hydroxyl value of 140 mgKOH/g has a poor wet adhesion.

Industrial Applicability

In the case when a shaped article, such as a resin shaped article, especially an olefin resin shaped article primer, is surface-treated with a primer (i.e., a kind of coating material) comprising the modified polymer of the present invention, the shaped article exhibits improved adhesion to and coatability with a coating liquid or an adhesive. In the case when the modified polymer of the present invention is incorporated as a binder resin or vehicle in a coating material such as a coating liquid or an ink, the coating material gives similarly adhesion-improving effects. The coating material comprising the modified polymer of the present invention exhibits improved adhesion to various shaped articles, particularly a resin shaped article, especially an olefin resin shaped article, and therefore, when the shaped articles are coated with the coating material, its surface appearance and texture can be kept for a long period of time.

In view of the above-mentioned beneficial effects, the coating material comprising the modified polymer of the present invention is suitable for use in surface modification of molding parts such as automobile parts, and electrical and electronic parts; packaging materials such as an adhesive tape; containers for beverage and cosmetics; sports goods such as sport shoes and golf balls; and construction materials and civil engineering materials, including gaskets and sealing materials. The coating material is especially useful for surface modification of automobile exterior parts such as bumpers, mat guards, weather strips and glass channels; and automobile interior parts such as instrument panels, grommets and air-bags.

**Claims**

1.    A modified polymer having a hydroxyl value in the range of 1 to 100 mgKOH/g, which is obtained by addition reaction of a compound (b) having one or more hydroxyl groups and a polymerizable unsaturated bond to a cyclized product (a) of a conjugated diene polymer having a cyclization degree in the range of 30 to 95%.

2.    The modified polymer according to claim 1, wherein the cyclized product of a conjugated diene polymer is a cyclized product of a homopolymer of a conjugated diene monomer or a copolymer of two or more kinds of conjugated diene monomers, or a copolymer of a conjugated diene monomer or monomers with not larger than 60% by weight of other copolymerizable monomer.

3.    The modified polymer according to claim 2, wherein the conjugated diene monomer is at least one monomer selected from 1,3-butadiene and isoprene.

4.   The modified polymer according to any one of claims 1 to 3, wherein the cyclized product of a conjugated diene polymer has a cyclization degree in the range of 50 to 90%.

5.   The modified polymer according to any one of claims 1 to 4, wherein the compound (b) having one or more hydroxyl groups and a polymerizable unsaturated bond is at least one compound selected from hydroxyalkyl esters of an unsaturated acid, unsaturated acid amides having one or more hydroxyl groups, polyalkylene glycol monoesters of an unsaturated acid, and polyhydric alcohol monoesters of an unsaturated acid.

6.   The modified polymer according to any one of claims 1 to 4, wherein the compound (b) having one or more hydroxyl groups and a polymerizable unsaturated bond is at least one compound selected from hydroxyalkyl esters of an unsaturated acid.

7.   The modified polymer according to any one of claims 1 to 4, wherein the compound (b) having one or more hydroxyl groups and a polymerizable unsaturated bond is at least one compound selected from 2-hydroxylethyl acrylate and 2-hydroxyethyl methacrylate.

8.   The modified polymer according to any one of claims 1 to 7, which has a hydroxyl value in the range of 5 to 50 mgKOH/g.

9.   The modified polymer according to any one of claims 1 to 8, which has a weight average molecular weight in the range of 5,000 to 600,000 as measured by gel permeation chromatography (GPC) and expressed in terms of that of polystyrene.

10.  A coating material comprising the modified polymer as described in any one of claims 1 to 9.

11.  The coating material according to claim 10, which is a primer, a coating liquid or an ink.

12.  The coating material according to claim 10, which is a primer comprising 5 to 95% by weight, based on the weight of the coating material, of the modified polymer.

13.  The coating material according to claim 10, which is a coating liquid comprising 5 to 95% by weight, based on the weight of the coating material, of the modified polymer.

14.  The coating material according to claim 10, which is an ink comprising a vehicle comprised of a polymer ingredient and a solvent wherein the polymer ingredient comprises 5 to 100% by weight of the modified polymer.

15.  A coated shaped article comprising a shaped article and a coating layer formed on the surface of the shaped article; said coating layer is formed from the coating material as claimed in any one of claims 10 to 14.

16.  The coated shaped article according to claim 15, wherein the shaped article is comprised of a polyolefin resin.

17.  A process for making a coated shaped article comprising coating the surface of a shaped article with the coating material as claimed in any one of claims 10 to 14.

**Patentansprüche**

1.   Modifiziertes Polymer mit einer Hydroxylzahl im Bereich von 1 bis 100 mgKOH/g, das durch Additionsreaktion einer Verbindung (b) mit einer oder mehreren Hydroxylgruppen und einer polymerisierbaren ungesättigten Bindung zu einem cyclisierten Produkt (a) eines konjugierten Dienpolymers mit einem Cyclisierungsgrad im Bereich von 30 bis 95% erhalten wird.

2.   Modifiziertes Polymer nach Anspruch 1, wobei das cyclisierte Produkt eines konjugierten Dienpolymers ein cyclisiertes Produkt eines Homopolymers eines konjugierten Dienmonomers oder eines Copolymers von zwei oder mehr Arten von konjugierten Dienmonomeren ist oder eines Copolymers eines konjugierten Dienmonomers oder Monomeren mit nicht mehr als 60 Gew.-% eines anderen copolymerisierbaren Monomers ist.

3. Modifiziertes Polymer nach Anspruch 2, worin das konjugierte Dienmonomer mindestens ein Monomer ist, ausgewählt aus 1,3-Butadien und Isopren.

4. Modifiziertes Polymer nach einem der Ansprüche 1 bis 3 wobei das cyclisierte Produkt eines konjugierten Dienpolymers einen Cyclisierungsgrad im Bereich von 50 bis 90% besitzt.

5. Modifiziertes Polymer nach einem beliebigen der Ansprüche 1 bis 4, wobei die Verbindung (b) mit einer oder mehreren Hydroxylgruppen und einer polymerisierbaren ungesättigten Bindung mindestens eine Verbindung ist, ausgewählt aus Hydroxyalkylestern einer ungesättigten Säure, ungesättigten Säureamiden mit einer oder mehreren Hydroxylgruppen, Polyalkylenglycolmonoestern einer ungesättigten Säure und Monoestern einer ungesättigten Säure mit mehrwertigen Alkoholen bzw. Polyalkoholen.

6. Modifiziertes Polymer nach einem der Ansprüche 1 bis 4, wobei die Verbindung (b) mit einer oder mehreren Hydroxylgruppen und einer polymerisierbaren ungesättigten Bindung mindestens eine Verbindung ist, ausgewählt aus Hydroxyalkylestern einer ungesättigten Säure.

7. Modifiziertes Polymer nach einem der Ansprüche 1 bis 4, wobei die Verbindung (b) mit einer oder mehreren Hydroxylgruppen und einer polymerisierbaren ungesättigten Bindung mindestens eine Verbindung ist, ausgewählt aus 2-Hydroxylethylacrylat und 2-Hydroxyethylmethacrylat.

8. Modifiziertes Polymer nach einem der Ansprüche 1 bis 7, das eine Hydroxylzahl im Bereich von 5 bis 50 mgKOH/g besitzt.

9. Modifiziertes Polymer nach einem der Ansprüche 1 bis 8, das ein gewichtsmittleres Molekulargewicht im Bereich von 5.000 bis 600.000, bestimmt durch Gelpermeationschromatographie (GPC) und ausgedrückt bezüglich demjenigen von Polystyrol, aufweist.

10. Beschichtungsmaterial umfassend das modifizierte Polymer wie in einem der Ansprüche 1 bis 9 beschrieben.

11. Beschichtungsmaterial nach Anspruch 10, das ein Primer, eine Beschichtungsflüssigkeit oder eine Tinte ist.

12. Beschichtungsmaterial nach Anspruch 10, das ein Primer, umfassend 5 bis 95 Gew.-%, bezogen auf das Gewicht des Beschichtungsmaterials, des modifizierten Polymers, ist.

13. Beschichtungsmaterial nach Anspruch 10, das eine Beschichtungsflüssigkeit umfassend 5 bis 95 Gew.-%, bezogen auf das Gewicht des Beschichtungsmaterials, des modifizierten Polymers, ist.

14. Beschichtungsmaterial nach Anspruch 10, das eine Tinte umfassend ein Vehikel, bestehend aus einem Polymerinhaltsstoff und einem Lösungsmittel, wobei der Polymerinhaltsstoff 5 bis 100 Gew.-% des modifizierten Polymers umfasst, ist.

15. Ein beschichtetes Formstück umfassend ein Formstück und eine auf der Oberfläche des Formstücks gebildete Beschichtungsschicht; die Beschichtungsschicht ist aus dem Beschichtungsmaterial nach einem der Ansprüche 10 bis 14 gebildet.

16. Beschichtetes Formstück nach Anspruch 15, wobei das Formstück aus einem Polyolefinharz besteht.

17. Verfahren zur Herstellung eines beschichteten Formstücks umfassend die Beschichtung der Oberfläche eines Formstücks mit dem Beschichtungsmaterial nach einem beliebigen der Ansprüche 10 bis 14.

**Revendications**

1. Polymère modifié ayant un indice hydroxy dans la plage de 1 à 100 mg de KOH/g, qui est obtenu par une réaction d'addition d'un composé (b) ayant un ou plusieurs groupes hydroxyle et une liaison insaturée polymérisable à un produit cyclisé (a) d'un polymère diène conjugué ayant un degré de cyclisation dans la plage de 30 à 95 %.

2. Polymère modifié selon la revendication 1, dans lequel le produit cyclisé d'un polymère diène conjugué est un produit cyclisé d'un homopolymère d'un monomère diène conjugué ou d'un copolymère de deux types ou plus de monomères diènes conjugués, ou un copolymère d'un ou de plusieurs monomères diènes conjugués avec pas plus de 60 % en poids d'un autre monomère copolymérisable.

3. Polymère modifié selon la revendication 2, dans lequel le monomère diène conjugué est au moins un monomère choisi parmi le 1,3-butadiène et l'isoprène.

4. Polymère modifié selon l'une quelconque des revendications 1 à 3, dans lequel le produit cyclisé d'un polymère diène conjugué a un degré de cyclisation dans la plage de 50 à 90 %.

5. Polymère modifié selon l'une quelconque des revendications 1 à 4, dans lequel le composé (b) ayant un ou plusieurs groupes hydroxyle et une liaison insaturée polymérisable est au moins un composé choisi parmi les esters hydroxyalkyliques d'un acide insaturé, les amides d'acide insaturé ayant un ou plusieurs groupes hydroxyle, les monoesters de polyalkylène glycol d'un acide insaturé, et les monoesters d'alcool polyhydrique d'un acide insaturé.

6. Polymère modifié selon l'une quelconque des revendications 1 à 4, dans lequel le composé (b) ayant un ou plusieurs groupes hydroxyle et une liaison insaturée polymérisable est au moins un composé choisi parmi les esters hydroxyalkyliques d'un acide insaturé.

7. Polymère modifié selon l'une quelconque des revendications 1 à 4, dans lequel le composé (b) ayant un ou plusieurs groupes hydroxyle et une liaison insaturée polymérisable est au moins un composé choisi parmi l'acrylate de 2-hydroxyéthyle et le méthacrylate de 2-hydroxyéthyle.

8. Polymère modifié selon l'une quelconque des revendications 1 à 7, qui possède un indice hydroxy dans la plage de 5 à 50 mg de KOH/g.

9. Polymère modifié selon l'une quelconque des revendications 1 à 8, qui possède un poids moléculaire moyen en masse dans la plage de 5 000 à 600 000 comme mesuré par une chromatographie par perméation de gel (GPC) et exprimé par le polystyrène.

10. Matériau de revêtement comprenant le polymère modifié décrit selon l'une quelconque des revendications 1 à 9.

11. Matériau de revêtement selon la revendication 10, qui est une couche primaire, un liquide de revêtement ou une encre.

12. Matériau de revêtement selon la revendication 10, qui est une couche primaire comprenant de 5 à 95 % en poids, par rapport au poids du matériau de revêtement, du polymère modifié.

13. Matériau de revêtement selon la revendication 10, qui est un liquide de revêtement comprenant de 5 à 95 % en poids, par rapport au poids du matériau de revêtement, du polymère modifié.

14. Matériau de revêtement selon la revendication 10, qui est une encre comprenant un véhicule constitué d'un ingrédient polymère et d'un solvant dans lequel l'ingrédient polymère comprend de 5 à 100 % en poids du polymère modifié.

15. Article moulé enduit comprenant un article moulé et une couche de revêtement formée sur la surface de l'article moulé ; ladite couche de revêtement est formée du matériau de revêtement selon l'une quelconque des revendications 10 à 14.

16. Article moulé enduit selon la revendication 15, dans lequel l'article moulé est constitué d'une résine polyoléfinique.

17. Procédé de préparation d'un article moulé enduit comprenant le revêtement de la surface d'un article moulé avec le matériau de revêtement selon l'une quelconque des revendications 10 à 14.